# EUROPÄISCHE PATENTSCHRIFT

(11) **EP 2 002 068 B1**
(45) Veröffentlichungstag und Bekanntmachung des Hinweises auf die Patenterteilung: **21.07.2010**
(21) Anmeldenummer: 07723943.2
(22) Anmeldetag: 03.04.2007
(51) Int. Cl.: E04F 13/08

(54) **KLAMMER ZUR BEFESTIGUNG VON PANEELELEMENTEN**
CLIP FOR FASTENING PANEL ELEMENTS
PINCE POUR LA FIXATION D'ELEMENTS EN PANNEAU

(30) Priorität: 05.04.2006 DE 202006005470 U
(43) Veröffentlichungstag der Anmeldung: 17.12.2008
(73) Patentinhaber: HDM GmbH, 47441 Moers (DE)
(72) Erfinder: DAMMERS, Dirk, 47506 Neukirchen-Vluyn (DE)
(74) Vertreter: Stark, Jens Christian
(86) Internationale Anmeldenummer: PCT/EP2007/003002
(87) Internationale Veröffentlichungsnummer: WO 2007/115747

(56) Entgegenhaltungen:
- EP-A1- 0 288 376
- EP-A2- 0 875 642
- WO-A-2006/032378
- CH-A5- 670 857
- DE-C1- 10 041 775
- DE-U1- 20 202 059
- US-A- 2 317 428
- US-A- 5 634 305
- US-A- 5 768 850

## Beschreibung

Die Erfindung betrifft ein System, mit wenigstens zwei Paneelelementen und wenigstens einer Klammer, wobei die Klammer zur Befestigung von Päneelelementen an einem Untergrund ausgebildet ist, wobei die Paneelelemente an einer Längs- und/oder Querkante eine die betreffende Kante in einen oberen und einen unteren Kantenabschnitt aufteilende Feder mit einer oberen Federflanke und einer unteren Federflanke, und an der gegenüberliegenden Längs- und/oder Querkante eine mit der Feder korrespondierende, die betreffende Kante in einen oberen und einen unteren Kantenabschnitt aufteilende Nut mit einer oberen Nutflanke und einer unteren Nutflanke aufweisen, wobei die Klammer eine auf dem Untergrund zu befestigende Grundplatte aufweist, an der ein Steg mit einer endseitigen, zur Grundplatte im Wesentlichen parallelen Abwinklung vorgesehen ist, wobei im montierten Zustand zweier benachbarter Paneelelemente der Steg zumindest in etwa an dem unteren Kantenabschnitt eines Paneelelementes anliegt und die Abwinklung zwischen der unterseitigen Federflänke der Feder und den die untere Nutflanke der Nut bildenden Teilbereich des unteren Kantenabschnitts eingeführt ist.

Derartige Paneelelemente werden beispielsweise zum Verkleiden von Wänden oder auch Räumen eingesetzt. Bei der Montage wird üblicherweise die Feder des zur Befestigung anstehenden Paneelelements in die Nut des zuletzt an dem Untergrund montierten Paneelelements eingeführt. Dabei wird die Feder vollständig in die Nut eingeführt, damit die beiden vorderen Kantenabschnitte beider Paneelelemente sich für einen guten Halt berühren. Dann wird das zuletzt montierte Brett an der Längskante mit der Nut mit Klammern gesichert. Hierzu wird die Klammer mit der Abwinklung in die Nut eingeführt und die Grundplatte mittels geeigneter Mittel, beispielsweise Schrauben, an dem Untergrund befestigt. Systeme von Paneelelementen und Klammern sind aus der DE 202 02 059 U1, der DE 100 41 7756 C1, der WO 2006/032378 A1, der US-PS 5, 768, 850, der EP 0 875 692 A2, der US-PS 2, 317, 928 und der CH 670 -857 A5 bekannt.

Nachteilig hierbei ist, dass mittels derartiger Klammern ein Verlegen benachbarter Paneelelemente mit einer sichtseitigen Fuge gewünschter Breite nicht möglich ist, da zur Gewährleistung einer sicheren Fixierung die Feder vollständig in die Nut eines benachbarten Paneelelements eingeführt werden muss.

Aufgabe der Erfindung ist es daher, die vorgenannten Nachteile zu vermeiden und ein System anzugeben, das auch eine Befestigung zweier benachbarter Paneelelemente in einem Abstand zur Erzielung einer frontseitigen Sichtfuge ermöglichen.

Diese Aufgabe wird dadurch gelöst, dass zur Begrenzung der Einführtiefe der Feder des Paneelelementes in die Nut des benachbarten Paneelelementes die Länge der Abwinklung größer ist als die Länge der unteren Nutflanke des unteren Kantenabschnitts, so dass der Nutgrund im eingeführten Zustand stirnseitig an dem freien Ende der Abwinklung anliegt.

Bei dieser Ausführungsform liegt der Steg an dem unteren Kantenabschnitt des Federpaneels an, während das freie

Ende der Abwinklung der Klammer mit dem Nutgrund des benachbarten Nutpaneels in Kontakt ist. Bei dieser Ausführungsform ist die Länge der Abwinklung größer als die Tiefe der Nut. Bei größer werdender Länge der Abwinklung reduziert sich mehr und mehr die Einführtiefe, so dass hierdurch die gewünschte frontseitige Sichtfuge vergrößert wird.

Vorzugsweise kann die Klammer an der Abwinklung endseitig mit einem von der Grundplatte weg weisenden, in etwa rechtwinklig abgewinkelten Anlagesteg versehen sein. Hierdurch wird die Anlagefläche zum Nutgrund vergrößert.

Die Aufgabe wird auch dadurch gelöst, dass zur Begrenzung der Einführtiefe der Feder des Paneelelementes in die Nut des benachbarten Paneelelementes die Klammer an der Abwinklung endseitig mit einem von der Grundplatte weg weisenden, in etwa rechtwinklig abgewinkelten Anlagesteg versehen ist, wobei die Länge der Abwinklung kleiner ist als die Länge der unteren Federflanke, so dass die Federstirnfläche im eingeführten Zustand stirnseitig an dem Anlagesteg anliegt. Bei dieser Ausführungsform liegt der untere Kantenabschnitt des Nutpaneels an dem Steg und die Federstirnfläche des benachbarten Federpaneels an dem Anlagesteg an. Die Länge der Abwinklung, d.h. der Abstand zwischen Steg und Anlagesteg, ist dabei geringer als die Tiefe der Nut, wobei bei kleiner werdendem Abstand zwischen Steg und Anlagesteg die Einführtiefe mehr und mehr reduziert wird.

Die Klammer kann beispielsweise als einstückiges Formblechteil ausgebildet sein. Der Steg ist in etwa orthogonal zur Längserstreckung der Grundplatte ausgerichtet. Dabei ist die Materialstärke, insbesondere des Steges, möglichst gering.

Für den Fall, dass der Steg eine etwas größere Materialstärke aufweist, bietet sich auch zur Realisierung einer frontseitigen Nullfuge an, wenn beispielsweise die Kante des unteren Kantenabschnittes dem Nutgrund näher benachbart ist als die Kante des oberen Kantenabschnittes. Selbstverständlich kann auch der untere Kantenabschnitt des Federpaneels gegenüber dem oberen Kantenabschnitt zurückversetzt angeordnet sein.

Dabei kann der Anlagesteg eine geringere Höhe als die Nut aufweisen. Die Höhe des Anlagestegs ist so gewählt, dass sie die Höhe der Nut nicht überschreitet, so dass die Abwinklung mit dem Anlagesteg in die Nut einführbar ist.

Die Höhe des Steges kann etwas größer sein als die Höhe des unteren Kantenabschnittes. Bei dieser Ausführungsform ist auch ein sicherer Halt der mittels der erfindungsgemäßen Klammer fixierten Paneelelemente in einer Richtung senkrecht zum Untergrund gewährleistet.

Im Folgenden werden in den Zeichnungen dargestellte Ausführungsbeispiele der Erfindung erläutert. Es zeigen:
- Fig. 1: zwei Paneelelemente im noch nicht mit einer erfindungsgemäßen Klammer verbundenen Zustand,
- Fig. 2: den Gegenstand nach Fig. 1 im montierten Zu- stand mit Sichtfuge,
- Fig. 3: zwei miteinander montierte Paneelelemente mit Nullfuge einer Klammer, die nicht die Erfindung zeigt, und
- Fig. 4: ein anderes Ausführungsbeispiel einer erfin- dungsgemäßen Klammer.

In allen Figuren werden für gleiche bzw. gleichartige Bauteile übereinstimmende Bezugszeichen verwendet.

In den Figuren sind Paneelelemente 1, 2 dargestellt, die mittels einer Klammer 3 auf einem Untergrund 4 befestigt sind. Bei dem Untergrund 4 kann es sich beispielsweise um eine Raumwand oder eine Raumdecke handeln. Die Befestigung der Klammer 3 auf dem Untergrund erfolgt beispielsweise mittels Schrauben, die als strichpunktierte Linie angedeutet sind.

Die Paneelelemente 1, 2 weisen an einer Längs- und/oder Querkante eine Feder 5 mit einer oberen und einer unteren Federfläche auf, welche die betreffende Kante in einen oberen und einen unteren Kantenabschnitt 6, 7 mit einer oberen und einer unteren Nutflanke unterteilt. In dem dargestellten Ausführungsbeispiel ist auf der Oberseite der Feder 5 ein in etwa halbkreisförmig ausgebildeter Vorsprung 8 vorgesehen.

An der gegenüberliegenden Längs- und/oder Querkante ist eine mit der Feder 5 korrespondierende Nut 9 vorgesehen, die die betreffende Kante in einen oberen und einen unteren Kantenabschnitt 6, 7 aufteilt. In dem oberen Kantenabschnitt 6 der Nut 9 sind in unterschiedlichem Abstand zur Stirnkante Ausnehmungen 10 vorgesehen, deren Querschnitt in etwa der Ausgestaltung des Vorsprungs 8 entspricht.

Für die Befestigung der Paneelelemente 1, 2 ist die Klammer 3 vorgesehen, die eine auf dem Untergrund 4 zu befestigende Grundplatte 11 aufweist, an der ein Steg 12 mit einer endseitigen, zur Grundplatte 11 im Wesentlichen parallelen Abwinklung 13, vorgesehen ist. Zusätzlich ist an der Abwinklung 13 endseitig ein von der Grundplatte 11 wegweisender, in etwa rechtwinklig abgewinkelter Anlagesteg 14 vorgesehen.

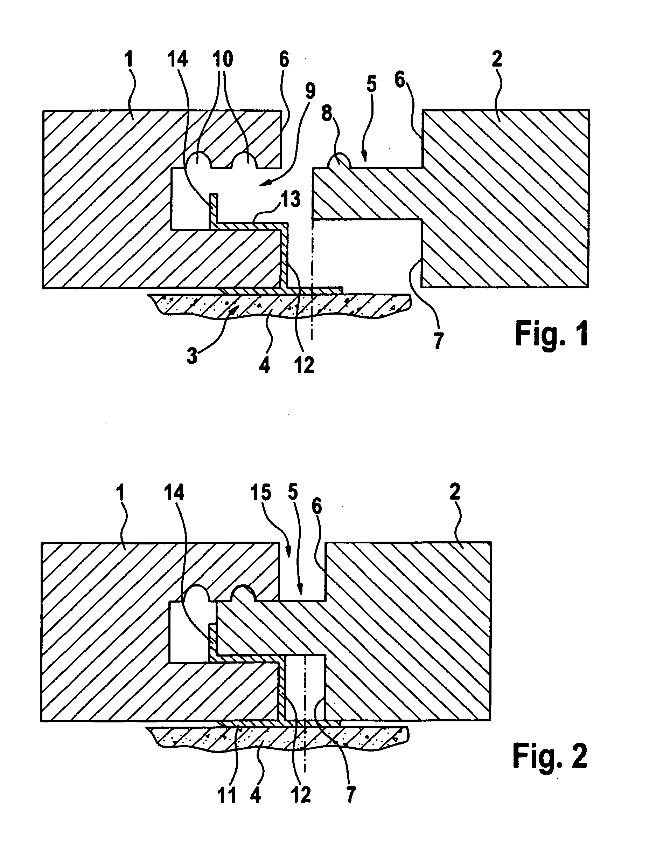

Bei der in den Fig. 1 und 2 dargestellten Klammer 3 ist der Abstand zwischen dem Steg 12 und dem Anlagesteg 14, d.h. die Breite der Abwinklung 13, kleiner als die Tiefe der Nut 9. Dies hat zur Folge, dass im eingeführten Zustand der Steg 12 mit dem unteren Kantenabschnitt 7 des Paneelelementes 1 (Nutpaneel) in Kontakt ist, während die Federstirnfläche der Feder 3 des Paneelelementes 2 (Federpaneel) den Anlagesteg 14 berührt, so dass damit die Einführtiefe bestimmt wird. Damit ergibt sich vorderseitig eine Sichtfuge 15.

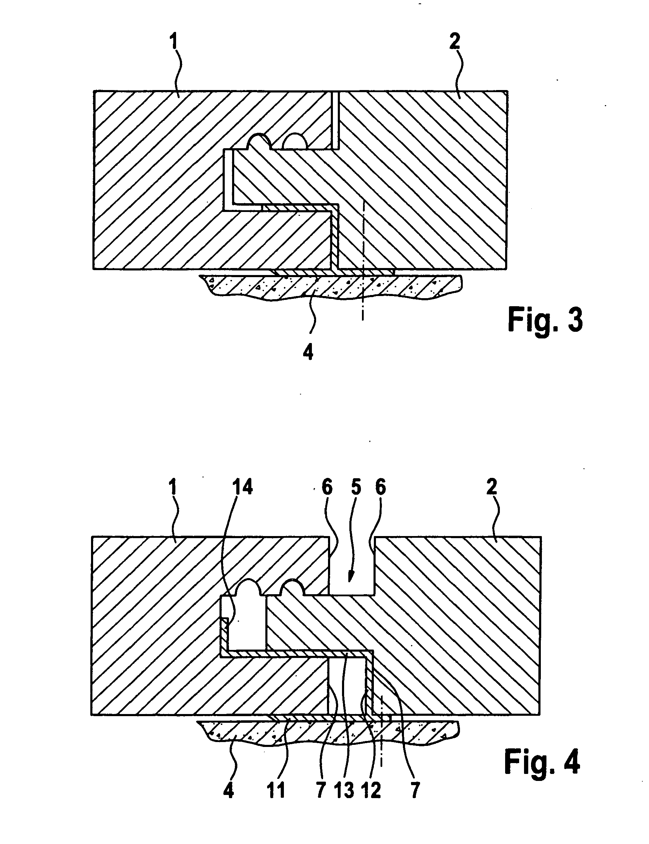

In Fig. 4 ist die Klammer 3 hinsichtlich der Dimensionierung der Abwinklung 13 anders ausgestaltet. Hier ist der Abstand zwischen dem Steg 12 und dem Anlagesteg 14, d.h. die Breite der Abwinklung 13, größer als die Tiefe der Nut 9. Damit liegt der untere Kantenabschnitt 7 des Paneelelementes 2 (Federpaneel) an dem Steg 12 und der Anlagesteg 14 an dem Nutgrund des Paneelelementes 1 (Nutpaneel) an, so dass damit die Einführtiefe bestimmt wird. Damit ergibt sich auch hier vorderseitig die Sichtfuge 15. Es ist selbstverständlich, dass auf den Anlagesteg 14 verzichtet werden kann, so dass dann das freie Ende der Abwinklung 13 an dem Nutgrund anliegt.

Bei "Entfernen" des Anlagestegs 14, so wie es in Fig. 3 dargestellt ist, kann eine Nullfuge im Bereich der Sichtseite zwischen zwei benachbarten Paneelelementen 1, 2 hergestellt werden, sofern die Länge der Abwinklung 13 kleiner als die Länge der unteren Nutflanke des unteren Kantenabschnitts 7 ist. Bei diesem Ausführungsbeispiel berühren der untere Kantenabschnitt 7 des Paneelelementes 2 (Federpaneel) und der untere Kantenabschnitt 7 des Paneelelementes 1 (Nutpaneel) den Steg 12.

Bei den dargestellten Ausführungsbeispielen findet sowohl bei Wahl einer frontseitigen Sichtfuge 15 als auch bei Wahl einer frontseitigen Nullfuge eine zusätzliche Verrastung durch das Zusammenwirken des Vorsprungs 8 und der Ausnehmung 10 statt. Durch Vergrößerung der Anzahl an Ausnehmungen 10 kann die Anzahl an einzustellenden Sichtfugenbreiten variiert werden, wobei hierauf die Klammer 3 abzustimmen ist.

Selbstverständlich können mit der erfindungsgemäßen Klammer auch Paneelelemente 1,2 ohne Vorsprung 8 und Ausnehmung 10 befestigt werden.

## Patentansprüche

1. System, mit wenigstens zwei Paneelelementen und wenigstens einer Klammer, wobei die Klammer (3) zur Befestigung von Paneelelementen (1, 2) an einem Untergrund (4) ausgebildet ist, wobei die Paneelelemente (1,2) an einer Längs- und/oder Querkante eine die betreffende Kante in einen oberen und einen unteren Kantenabschnitt (6, 7) aufteilende Feder (5) mit einer oberen Federflanke und einer unteren Federflanke, und an der gegenüberliegenden Längs- und/oder Querkante eine mit der Feder korrespondierende, die betreffende Kante in einen oberen und einen unteren Kantenabschnitt (6, 7) aufteilende Nut (9) mit einer oberen Nutflanke und einer unteren Nutflanke aufweisen, wobei die Klammer (3) eine auf dem Untergrund (4) zu befestigende Grundplatte (11) aufweist, an der ein Steg (12) mit einer endseitigen, zur Grundplatte (11) im Wesentlichen parallelen Abwinklung (13) vorgesehen ist, wobei im montierten Zustand zweier benachbarter Paneelelemente (1, 2) der Steg (12) zumindest in etwa an dem unteren Kantenabschnitt (7) eines Paneelelementes (1, 2) anliegt und die Abwinklung (13) zwischen der unterseitigen Federflanke der Feder (5) und den die untere Nutflanke der Nut (9) bildenden Teilbereich des unteren Kantenabschnitts (7) eingeführt ist, **dadurch gekennzeichnet, dass** zur Begrenzung der Einführtiefe der Feder (5) des Paneelelementes (2) in die Nut (9) des benachbarten Paneelelementes (1) die Länge der Abwinklung (13) größer ist als die Länge der unteren Nutflanke des unteren Kantenabschnitts (7), so dass der Nutgrund im eingeführten Zustand stirnseitig an dem freien Ende der Abwinklung (13) anliegt.

2. System nach dem vorhergehenden Anspruch, **dadurch gekennzeichnet, dass** die Klammer (3) an der Abwinklung (13) endseitig mit einem von der Grundplatte (11) weg weisenden, in etwa rechtwinklig abgewinkelten Anlagesteg (14) versehen ist.

3. System, mit wenigstens zwei Paneelelementen und wenigstens einer Klammer, wobei die Klammer (3) zur Befestigung von Paneelelementen (1, 2) an einem Untergrund (4) ausgebildet ist, wobei die Paneelelemente (1, 2) an einer Längs- und/oder Querkante eine die betreffende Kante in einen oberen und einen unteren Kantenabschnitt (6, 7) aufteilende Feder (5) mit einer oberen Federflanke und einer unteren Federflanke, und an der gegenüberliegenden Längs- und/oder Querkante eine mit der Feder korrespondierende, die betreffende Kante in einen oberen und einen unteren Kantenabschnitt (6, 7) aufteilende Nut (9) mit einer oberen Nutflanke und einer unteren Nutflanke aufweisen, wobei die Klammer (3) eine auf dem Untergrund (4) zu befestigende Grundplatte (11) aufweist, an der ein Steg (12) mit einer endseitigen, zur Grundplatte (11) im Wesentlichen parallelen Abwinklung (13) vorgesehen ist, und die Klammer (3) an der Abwinklung (13) endseitig mit einem von der Grundplatte (11) weg weisenden, in etwa rechtwinklig abgewinkelten Anlagesteg (14) versehen ist, wobei im montierten Zustand zweier benachbarter Paneelelemente (1, 2) der Steg (12) zumindest in etwa an dem unteren Kantenabschnitt (7) eines Paneelelementes (1, 2) anliegt und die Abwinklung (13) zwischen der unterseitigen Federflanke der Feder (5) und den die untere Nutflanke der Nut (9) bildenden Teilbereich des unteren Kantenabschnitts (7) eingeführt ist, **dadurch gekennzeichnet, dass** zur Begrenzung der Einführtiefe der Feder (5) des Paneelelementes (2) in die Nut (9) des benachbarten Paneelelements (1) Länge der Abwinklung (13) kleiner ist als die Länge der unteren Federflanke, so dass die Federstirnfläche im eingeführten Zustand stirnseitig an dem Anlagesteg(14) anliegt.

4. System nach den Ansprüchen 2 und 3, **dadurch gekennzeichnet, dass** der Anlagesteg (14) eine geringere Höhe als die Nut (9) aufweist.

5. System nach einem der vorhergehenden Ansprüche, **dadurch gekennzeichnet, dass** die Höhe des Steges (12) etwas größer als die Höhe des unteren Kantenabschnittes (7) ist.

## Claims

1. System, with at least two panel elements and at least one clip, wherein the clip (3) is realized for securing panel elements (1, 2) to an underlying surface (4), wherein, on a longitudinal and/or transverse edge, the panel elements (1, 2) have a spring (5), dividing the relevant edge into an upper and a lower edge portion (6, 7), with an upper spring flank and a lower spring flank, and, on the oppositely situated longitudinal and/or transverse edge, a groove (9), corresponding with the spring and dividing the relevant edge into an upper and a lower edge portion (6, 7), with an upper groove flank and a lower groove flank, wherein the clip (3) has a base plate (11), which is to be secured to the underlying surface (4) and on which a web (12) with a end-face angled portion (13) that is substantially parallel to the base plate (11) is provided, wherein, in the mounted state of two adjacent panel elements (1, 2), the web (12) abuts at least approximately against the lower edge portion (7) of a panel element (1, 2) and the angled portion (13) is introduced between the lower spring flank of the spring (5) and the part region of the lower edge portion (7) forming the lower groove flank of the groove (9), **characterized in that** to define the insertion depth of the spring (5) of the panel element (2) into the groove (9) of the adjacent panel element (1), the length of the angled portion (13) is greater than the length of the lower groove flank of the lower edge portion (7), such that the groove bottom, in the inserted state, abuts on the end side against the free end of the angled portion (13).

2. System according to the preceding claim, **characterized in that** the clip (3), at the end face of the angled portion (13), is provided with an abutment web (14), which points away from the base plate (11) and is angled approximately at a right angle.

3. System, with at least two panel elements and at least one clip, wherein the clip (3) is realized for securing panel elements (1, 2) to an underlying surface (4), wherein, on a longitudinal and/or transverse edge, the panel elements (1, 2) have a spring (5), dividing the relevant edge into an upper and a lower edge portion (6, 7), with an upper spring flank and a lower spring flank, and, on the oppositely situated longitudinal and/or transverse edge, a groove (9), corresponding with the spring and dividing the relevant edge into an upper and a lower edge portion (6, 7), with an upper groove flank and a lower groove flank, wherein the clip (3) has a base plate (11), which is to be secured to the underlying surface (4) and on which a web (12) with a end-face angled portion (13) that is substantially parallel to the base plate (11) is provided, and at the end face of the angled portion (13), the clip (3) is provided with an abutment web (14), which points away from the base plate 11) and is angled approximately at a right angle, wherein in the mounted state of two adjacent panel elements (1, 2), the web (12) abuts at least approximately against the lower edge portion (7) of a panel element (1, 2) and the angled portion (13) is introduced between the lower spring flank of the spring (5) and the part region of the lower edge portion (7) forming the lower groove flank of the groove (9), **characterized in that** to define the insertion depth of the spring (5) of the panel element (2) into the groove (9) of the adjacent panel element (1), the length of the angled portion (13) is smaller than the length of the lower groove flank, such that the end face of the spring, in the inserted state, abuts on the end side against the abutment web (14).

4. System according to Claims 2 and 3, **characterized in that** the height of the abutment web (14) is less than the height of the groove (9).

5. System according to one of the preceding claims, **characterized in that** the height of the web (12) is somewhat greater than the height of the lower edge portion (7).

## Revendications

1. Système comprenant au moins deux éléments de panneaux et au moins une bride, ladite bride (3) étant réalisée en vue de la fixation d'éléments de panneaux (1, 2) à une structure sous-jacente (4), lesdits éléments de panneaux (1, 2) comportant, sur un bord longitudinal et/ou transversal, une languette (5) qui présente un flanc supérieur et un flanc inférieur, et scinde le bord considéré en des régions marginales (6, 7) supérieure et inférieure, et comportant, sur le bord longitudinal et/ou transversal disposé en vis-à-vis, une rainure (9) qui offre un flanc supérieur et un flanc inférieur, concorde avec ladite languette et subdivise le bord considéré en des régions marginales (6, 7) supérieure et inférieure ; sachant que ladite bride (3) est munie d'une plaquette de base (11) conçue pour être fixée à la structure sous-jacente (4), et sur laquelle est prévue une membrure (12) dotée d'un coude extrême (13) substantiellement parallèle à ladite plaquette de base (11) ; et sachant que, à l'état monté de deux éléments de panneaux (1, 2) voisins, ladite membrure (12) est au moins sensiblement en applique contre la région marginale inférieure (7) d'un élément de panneau (1, 2), et ledit coude (13) est engagé entre le flanc situé à la face inférieure de ladite languette (5) et la zone partielle de la région marginale inférieure (7) qui matérialise le flanc inférieur de ladite rainure (9), **caractérisé par le fait que**, en vue de limiter la profondeur de pénétration de la languette (5) de l'élément de panneau (2) dans la rainure (9) de l'élément de panneau (1) voisin, la longueur du coude (13) est plus grande que la longueur du flanc inférieur de la rainure de la région marginale inférieure (7), de telle sorte que le fond de ladite rainure porte frontalement, à l'état inséré, contre l'extrémité libre dudit coude (13).

2. Système selon la revendication précédente, **caractérisé par le fait que** la bride (3) est pourvue, à l'extrémité du coude (13), d'une nervure de contact (14) tournée à l'opposé de la plaquette de base (11) et sensiblement coudée à angle droit.

3. Système comprenant au moins deux éléments de panneaux et au moins une bride, ladite bride (3) étant réalisée en vue de la fixation d'éléments de panneaux (1, 2) à une structure sous-jacente (4), lesdits éléments de panneaux (1, 2) comportant, sur un bord longitudinal et/ou transversal, une languette (5) qui présente un flanc supérieur et un flanc inférieur, et scinde le bord considéré en des régions marginales (6, 7) supérieure et inférieure, et comportant, sur le bord longitudinal et/ou transversal disposé en vis-à-vis, une rainure (9) qui offre un flanc supérieur et un flanc inférieur, concorde avec ladite languette et subdivise le bord considéré en des régions marginales (6, 7) supérieure et inférieure ; sachant que ladite bride (3) est munie d'une plaquette de base (11) conçue pour être fixée à la structure sous-jacente (4), et sur laquelle est prévue une membrure (12) dotée d'un coude extrême (13) substantiellement parallèle à ladite plaquette de base (11) ; sachant que ladite bride (3) est pourvue, à l'extrémité dudit coude (13), d'une nervure de contact (14) tournée à l'opposé de ladite plaquette de base (11) et sensiblement coudée à angle droit ; et sachant que, à l'état monté de deux éléments de panneaux (1, 2) voisins, ladite membrure (12) est au moins sensiblement en applique contre la région marginale inférieure (7) d'un élément de panneau (1, 2), et ledit coude (13) est engagé entre le flanc situé à la face inférieure de ladite languette (5) et la zone partielle de la région marginale inférieure (7) qui matérialise le flanc inférieur de ladite rainure (9), **caractérisé par le fait que**, en vue de limiter la profondeur de pénétration de la languette (5) de l'élément de panneau (2) dans la rainure (9) de l'élément de panneau (1) voisin, la longueur du coude (13) est plus petite que la longueur du flanc inférieur de ladite languette, de telle sorte que la face extrême de ladite languette porte frontalement, à l'état inséré, contre ladite nervure de contact (14).

4. Système selon les revendications 2 et 3, **caractérisé par le fait que** la nervure de contact (14) présente une hauteur moindre que celle de la rainure (9).

5. Système selon l'une des revendications précédentes, **caractérisé par le fait que** la hauteur de la membrure (12) est sensiblement plus grande que la hauteur de la région marginale inférieure (7).
